(19) Europäisches Patentamt
European Patent Office
Office européen des brevets

(11) **EP 3 814 862 B1**

(12) **EUROPÄISCHE PATENTSCHRIFT**

(45) Veröffentlichungstag und Bekanntmachung des Hinweises auf die Patenterteilung:
**27.09.2023   Patentblatt 2023/39**

(21) Anmeldenummer: **19761752.5**

(22) Anmeldetag: **12.08.2019**

(51) Internationale Patentklassifikation (IPC):
**G05B 23/02** *(2006.01)*

(52) Gemeinsame Patentklassifikation (CPC):
**G05B 23/0283;** G05B 2219/32234

(86) Internationale Anmeldenummer:
**PCT/EP2019/071567**

(87) Internationale Veröffentlichungsnummer:
**WO 2020/035439 (20.02.2020 Gazette 2020/08)**

(54) **ANORDNUNG UND VERFAHREN ZUR PROGNOSE EINER RESTNUTZUNGSDAUER EINER MASCHINE**

ASSEMBLY AND METHOD FOR FORECASTING A REMAINING USEFUL LIFE OF A MACHINE

DISPOSITIF ET PROCÉDÉ DE PRÉVISION D'UNE DURÉE DE VIE RÉSIDUELLE D'UNE MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.08.2018   EP 18188924**

(43) Veröffentlichungstag der Anmeldung:
**05.05.2021   Patentblatt 2021/18**

(73) Patentinhaber: **Siemens Aktiengesellschaft 80333 München (DE)**

(72) Erfinder:
• **BERGS, Christoph 52134 Herzogenrath (DE)**
• **HILDEBRANDT, Marcel 80634 München (DE)**
• **KHALIL, Mohamed 81379 München (DE)**
• **MOGOREANU, Serghei 81827 München (DE)**
• **SHYAM SUNDER, Swathi 81549 München (DE)**

(74) Vertreter: **Siemens Patent Attorneys Postfach 22 16 34 80506 München (DE)**

(56) Entgegenhaltungen:
**US-A1- 2012 179 326     US-A1- 2017 091 358**

EP 3 814 862 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Zur Prognose einer Restnutzungsdauer (im Englischen als "remaining useful life" bezeichnet) einer Maschine im industriellen Einsatz sind Herangehensweisen aus den Gebieten der Zustandsüberwachung (im Englischen "Condition Monitoring") im Allgemeinen sowie dem sogenannten Structural Health Monitoring im Besonderen bekannt. Durch Überwachung der mechanischen Belastungen der Maschine kann ihre voraussichtliche Restnutzungsdauer prognostiziert werden, wodurch sich ihre Reparatur- und Ausfallzeiten minimieren lassen. Die Lebensdauer der Maschine wird erhöht, und Service-Intervalle können besser geplant werden.

Zur Prognose der Restnutzungsdauer erstellt ein Experte der jeweiligen Domäne üblicherweise ein CAD-Modell sowie ein Strukturmechanik-Modell mittels der Finite-Elemente-Methode (FEM-Simulation) der Maschine. Anschließend werden Zustandsdaten der Maschine ermittelt, welche beispielsweise aus Sensordaten gewonnen werden, welche unter anderem von Vibrationssensoren an der Maschine geliefert werden können. Die Zustandsdaten werden als Randbedingungen in der FEM-Simulation berücksichtigt, wodurch sich die Restnutzungsdauer prognostizieren lässt.

So offenbart US 2017/091358 A1 ein Verfahren zur Prognose einer Restnutzungsdauer einer Maschine, bei dem ein oder mehrere Parameterwerte als Zustandsdaten der Maschine ermittelt werden, und bei dem anhand der ermittelten Parameterwerte eine Strömungssimulation (CFD-Simulation) rechnergestützt durchgeführt wird, anhand deren Ausgabe mittels einer Finite-Elemente-Analyse eine Restnutzungsdauer-Prognose für die Maschine ermittelt wird.

Durch die vorliegende Erfindung soll eine Alternative zum Stand der Technik geschaffen werden.

Diese Aufgabe wird erfindungsgemäß dadurch gelöst, dass zur Prognose einer Restnutzungsdauer einer Maschine, insbesondere eines Motors, wobei die Maschine einer Maschinenklasse angehört, anhand von Zustandsdaten der Maschine mehrere voneinander unabhängige Basissimulationen durchgeführt werden, welche jeweils rechnergestützt eine Restnutzungsdauer-Prognose für jeweils eine Maschine der Maschinenklasse ermitteln. Die Restnutzungsdauer-Prognosen und Kenndaten, welche Eigenschaften der Maschine beschreiben, werden einem neuronalen Netz zugeführt, das eine Zuordnung einer beliebigen Maschine zu den Basissimulationen erlernt hat.

Das neuronale Netz gibt Gewichte für die Restnutzungsdauer-Prognosen aus. Eine finale Prognose wird rechnergestützt aus den Restnutzungsdauer-Prognosen berechnet, indem die Restnutzungsdauer-Prognosen entsprechend der Gewichte zueinander gewichtet werden.

Die Anordnung beinhaltet eine oder mehrere Recheneinheiten, welche programmiert sind zur Durchführung mehrerer voneinander unabhängiger Basissimulationen, welche jeweils eine Restnutzungsdauer-Prognose für jeweils eine Maschine der Maschinenklasse anhand von Zustandsdaten der Maschine ermitteln; zur Zuführung der Restnutzungsdauer-Prognosen gemeinsam mit Kenndaten, welche Eigenschaften der Maschine beschreiben, zu einem neuronalen Netz, das eine Zuordnung einer beliebigen Maschine zu den Basissimulationen erlernt hat; zur Ausgabe von Gewichten für die Restnutzungsdauer-Prognosen durch das neuronale Netz; und zur Berechnung einer finalen Prognose aus den Restnutzungsdauer-Prognosen, wobei die Restnutzungsdauer-Prognosen entsprechend der Gewichte zueinander gewichtet sind.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Die Recheneinheit der Anordnung ist beispielsweise eine speicherprogrammierbare Steuerung, ein Mikroprozessor oder Mikrocontroller, ein System-on-Chip oder ein programmierbarer Digitalbaustein, etwa ein "Field Programmable Gate Array" (FPGA), eine Workstation, ein Server, ein Computernetzwerk oder eine Cloud. Es können auch mehrere der genannten Recheneinheiten parallel die gleichen oder unterschiedliche Berechnungsschritte ausführen.

Das Verfahren und die Anordnung nutzen ein hybrides Modell, welches sich aus der Kombination der Basissimulationen mit dem neuronalen Netz ergibt. Anders als bisher kann die Restnutzungsdauer nicht nur für eine kleine Anzahl von Maschinen prognostiziert werden, für die von Hand ein spezifisches Simulationsmodell erstellt wurde. Stattdessen ermöglicht das hybride Modell auch eine Zustandsüberwachung für beliebige weitere Typen und Konfigurationen von Maschinen, welche lediglich der gleichen Maschinenklasse angehören. Die Basissimulationen können somit auch auf bisher unbekannte Maschinen angewendet werden. Der Zeitaufwand für die manuelle Erstellung einer FEM-Simulation und ggf. eines CAD-Modells entfällt. Das neuronale Netz entscheidet datengetrieben, welche der Basissimulationen als maschinelle Experten wie stark herangezogen werden sollen.

Anders als bei einem manuellen Nachschlagen der besten Basissimulation anhand der Kenndaten kann das neuronale Netz auch Aspekte der Kenndaten auswerten und implizit erlernen, welche sich dem Menschen nicht unmittelbar erschließen. Weiterhin kann das neuronale Netz auch komplexe nicht-lineare Abhängigkeiten zwischen den Kenndaten, den Zustandsdaten und der Restnutzungsdauer erlernen. Das Lernen kann datengetrieben erfolgen, sodass die Zuordnung nicht von Hand spezifiziert werden muss.

Ein weiterer Vorteil liegt darin, dass das neuronale Netz mehrere Basissimulationen kombinieren und zueinander gewichten kann. Hierdurch entsteht ein aggregiertes Modell, das eine stärkere Vorhersagekraft besitzt als jede Basissimulation für sich allein.

Gegenüber einem rein datengetriebenen Lernen mit einem neuronalen Netz, welches nicht mit den Basissimulationen zusammenarbeitet, ergibt sich der Vorteil, dass die Gewichte, welche das neuronale Netz ausgibt, für den Menschen einsehbar sind, sodass nachvollzogen werden kann, welche der Basissimulationen wie stark für die Prognose der Restnutzungsdauer herangezogen wurden. Hierdurch ergibt sich auch die Möglichkeit für einen Wartungs- oder Berechnungsingenieur, die Gewichte zu kontrollieren und ggf. zu korrigieren.

Gemäß einer Ausführungsform gibt das neuronale Netz einen Vektor linearer Gewichte aus. Die finale Prognose wird berechnet, indem die Restnutzungsdauer-Prognosen mithilfe der Gewichte als Koeffizienten linear kombiniert werden.

Gemäß einer weiteren Ausführungsform erfassen Sensoren Sensordaten eines Betriebs der Maschine. Aus den Sensordaten werden die Zustandsdaten der Maschine rechnergestützt abgeleitet.

In einer Weiterbildung werden die Sensordaten nach der Erfassung in eine Cloud übermittelt, in welcher die restlichen Verfahrensschritte durchgeführt werden. Alternativ werden die Zustandsdaten nach deren Ableitung in eine Cloud übermittelt werden, in welcher die restlichen Verfahrensschritte durchgeführt werden.

Gemäß einer Ausführungsform werden die Zustandsdaten der Maschine durch Zustandserkennungsmodul, insbesondere ein neuronales Netz, aus den Sensordaten abgeleitet. Hierbei handelt es sich um ein anderes neuronales Netz als das zuvor erwähnte.

Auf dem computerlesbaren Datenträger ist ein Computerprogramm gespeichert, welches das Verfahren ausführt, wenn es in einem Prozessor abgearbeitet wird.

Das Computerprogramm wird in einem Prozessor abgearbeitet und führt dabei das Verfahren aus.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:

Fig. 1     ein Ablaufdiagramm zur Prognose einer Restnutzungsdauer einer Maschine, und

Fig. 2     eine Übersicht einer Produktionsanlage PP, einer industrielle Cloud IC sowie eines Armaturenbretts zur vorausschauenden Instandhaltung PMD.

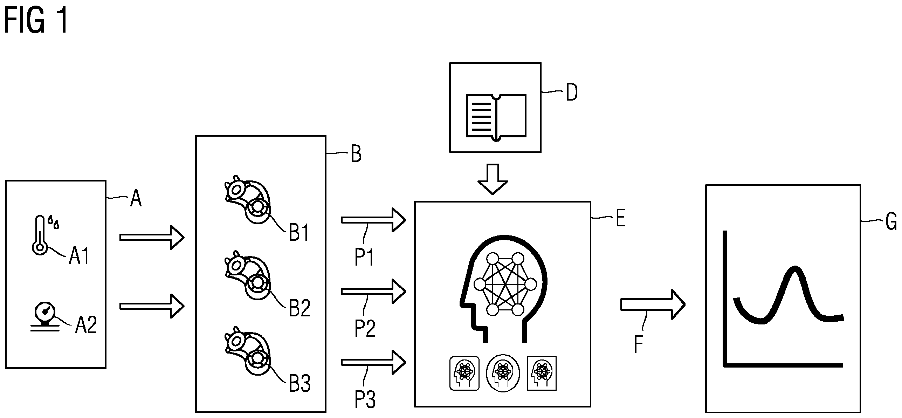

Figur 1 zeigt ein Ablaufdiagramm zur Prognose einer Restnutzungsdauer einer Maschine. Zunächst erfassen Sensoren Sensordaten eines Betriebs der Maschine. In vielen Fällen sind Sensormessungen von Vibrationen von besonderer Bedeutung. Bei der Maschine handelt es sich beispielsweise um einen Motor in einer Produktionsanlage. Die Sensordaten werden dezentral in einer Peripherieeinheit gesammelt und an eine speicherprogrammierbare Steuerung weitergeleitet.

Zur Überwachung eines Motors werden beispielsweise zwei bis drei Sensoren platziert, etwa Vibrations- und Beschleunigungssensoren, welche ggf. noch um einen Temperatursensor sowie Dehnungsmessstreifen ergänzt werden können. Die Sensoren werden vorzugsweise antriebsseitig auf dem Lagerschild angeordnet, möglichst in der Nähe des Lagers bzw. der Welle. Die Messrichtung der Vibrationssensoren wird vorzugsweise lateral zur Welle ausgerichtet.

Ein in Figur 1 nicht näher gezeigtes Zustandserkennungsmodul leitet Zustandsdaten A aus den Sensordaten ab, darunter beispielsweise als erste Zustandsdaten A1 einen Parallelversatz und als zweite Zustandsdaten A2 einen Winkelversatz einer Wellenausrichtung des Motors. Das Zustandserkennungsmodul ist ein KI-basiertes Erkennungsmodul, welches als Zustandsdaten A Fehler oder Anomalien wie etwa den Parallelversatz oder Winkelversatz, oder auch allgemeine Betriebsparameter wie etwa eine Umdrehungsgeschwindigkeit des Motors aus den Sensordaten ableiten kann. Die Zustandsdaten können beispielsweise Typ, Ausmaß und/oder Ort solcher Fehler oder Anomalien enthalten und hängen von der jeweiligen Maschinenklasse ab.

Als Zustandserkennungsmodul eignet sich ein neuronales Netz, beispielsweise ein CNN (Abkürzung für engl. "Convolutional Neural Network"), ein RNN (rekurrentes neuronales Netz) oder ein LSTM-Netz (Abkürzung für engl. "Long Short-Term Memory").

Dieses neuronale Netz wird vorab trainiert, um die Beziehung zwischen den Sensordaten und den Zustandsdaten zu erlernen. Dieses Training erfolgt vorab, da es robust und generisch für Maschinen der gleichen Klasse durchführbar ist.

Hierzu werden vorab Sensordaten von einem experimentellen Aufbau mehrerer Maschinen oder von Maschinen im realen Einsatz aufgenommen, welche mit den zuvor erläuterten Sensoren ausgerüstet wurden. Die Sensordaten werden manuell mit Zustandsdaten der jeweiligen Maschinen (z.B. gesund oder fehlerhaft, ggf. welcher Fehler) als Label versehen, wodurch Trainingsdaten gebildet werden. Das Training des neuronalen Netzes erfolgt anschließend mit diesen Trainingsdaten.

Bei dem in Figur 1 gezeigten Ausführungsbeispiel liegt ein derart trainiertes Zustandserkennungsmodul bereits vor, sodass dieses die Zustandsdaten A ausgehend von den Sensordaten der zu untersuchenden Maschine unmittelbar bereitstellen kann.

Anhand der Zustandsdaten A werden nun mehrere voneinander unabhängige Basissimulationen B rechnergestützt durchgeführt. Bei den Basissimulationen B handelt es sich um Simulationsmodelle, welche zumindest der Maschinenklasse der Maschine entsprechen, und eine Restnutzungsdauer prognostizieren.

Durch die Maschinenklasse werden bestimmte Charakteristika vorgegeben. So beziehen sich sämtliche Basissimulationen beispielsweise auf die Maschinenklasse Motor oder eine bestimmte Motorenklasse, etwa Elektromotor, oder eine Unterklasse wie den Drehstrommotor. Für die konkret vorliegende Maschine müssen die Basissimulationen B keine genauen Vorhersagen treffen können, da sie jeweils unterschiedliche Typen von Maschinen innerhalb der jeweiligen Klasse simulieren. Dennoch kann jede Basissimulation Informationen enthalten, welcher zur Prognose der Restnutzungsdauer einer bisher unbekannten Maschine beitragen. Das Maß, in dem eine gegebene Basissimulation zur Prognose beitragen kann, ergibt sich aus den zugrundeliegenden physikalischen Eigenschaften der Maschine und der Basissimulation. Hierbei spielen besonders die Geometrie und die Materialeigenschaften der Maschine eine Rolle, welche in einem Datenblatt der Maschine spezifiziert sind, welches im Rahmen ihrer Kenndaten D vorliegt. Die Kenndaten D sind beispielsweise Katalogdaten, welche Eigenschaften der Maschine angeben, etwa deren Geometrie oder ihre Materialeigenschaften.

Eine erste Basissimulation B1 ermittelt hierbei eine erste Restnutzungsdauer-Prognose P1 für die Maschine, eine zweite Basissimulation B2 eine zweite Restnutzungsdauer-Prognose P2, und eine dritte Basissimulation B3 eine dritte Restnutzungsdauer-Prognose P3. Die Restnutzungsdauer-Prognosen P1, P2 und P3 sowie die Kenndaten D, welche die Eigenschaften der Maschine beschreiben, werden anschließend einem neuronalen Netz E zugeführt, welches Gewichte F ausgibt. Das in Figur 1 gezeigte neuronale Netz E ist unabhängig von dem neuronalen Netz, welches zuvor als mögliche Implementierung des Zustandserkennungsmoduls erläutert wurde und die Zustandsdaten aus den Sensordaten ableitet.

Eine finale Prognose G wird aus den Restnutzungsdauer-Prognosen rechnergestützt berechnet, indem die Restnutzungsdauer-Prognosen P1, P2 und P3 entsprechend der Gewichte F zueinander gewichtet werden.

Das neuronale Netz E ist beispielsweise ein mehrschichtiges vorwärtsgerichtetes Netz und gibt einen Vektor linearer Gewichte (w1, w2, w3) aus. In diesem Fall kann die finale Prognose G berechnet werden, indem die Restnutzungsdauer-Prognosen P1, P2 und P3 mithilfe der Gewichte w1, w2, w3 als Koeffizienten linear kombiniert werden:

$$G = w1 \cdot P1 + w2 \cdot P2 + w3 \cdot P3.$$

Bei den Restnutzungsdauer-Prognosen P1, P2 und P3 sowie der finalen Prognose G kann es sich beispielsweise um Zahlenwerte handeln, welche eine verbleibende Dauer von Tagen oder Monaten angeben. Als Datentyp für diese Variablen kann beispielsweise jeweils eine Fließkommazahl gewählt werden, welche in einem Doppelwort gespeichert wird.

Als Basissimulationen B eignen sich grundsätzlich beliebige Black-Box- und White-Box-Modelle. Beispielsweise eignen sich für die Basissimulationen B auch Modelle, welche Beziehungen zwischen Komponenten der Maschine (beispielsweise Rotor, Stator, Lager usw.) sowie deren Interaktion durch empirische Gleichungen modellieren.

Bevorzugt werden als Basissimulationen FEM-Simulationen eingesetzt. Die Abkürzung FEM bezeichnet die aus dem Stand der Technik bekannte Finite-Elemente-Methode, welche zur Modellierung und Simulation der Maschine eingesetzt wird. Im Rahmen der Finite-Elemente-Methode werden die Zustandsdaten A als Randbedingungen unmittelbar berücksichtigt. FEM-Simulationen eignen sich besonders für Maschinen mit komplizierten Strukturen, wie dies bei Motoren der Fall ist.

Vor dem Einsatz zur Prognose der Restnutzungsdauer muss das neuronale Netz E einem Training unterzogen werden, bei dem das neuronale Netz E implizit eine Zuordnung einer beliebigen Maschine zu den einzelnen Basissimulationen B erlernt, d.h. welche Basissimulationen B besonders gut zu dieser Maschine passen.

Hierzu werden Trainingsdaten erzeugt, indem die Basissimulationen für viele unterschiedliche Zustandsdaten durchgeführt werden. Die Zustandsdaten werden künstlich erzeugt, indem zunächst ein Bereich im Raum der Zustandsdaten ausgewählt wird, welcher eine möglichst realistische Bandbreite von Zustandsdaten abdeckt, also Zustände wie Fehler und Anomalien, welche im laufenden Betrieb tatsächlich auftreten können. Anschließend werden in diesem Bereich Werte entlang eines äquidistanten Gitters generiert. Die Zustandsdaten enthalten dabei zahlreiche virtuelle Anomalien, welche von den Basissimulationen bzw. den Finite-Elemente-Modellen verarbeitet werden. Für jede Ausprägung von Zustandsdaten wird eine Restnutzungsdauer berechnet, wodurch sich jeweils ein Datenpaar als Trainingsdaten für das neuronale Netz E ergibt. Das Datenpaar enthält die jeweiligen Zustandsdaten als Eingangsdaten und die jeweilige Restnutzungsdauer als Ausgangsdaten. Mit diesen Datenpaaren wird das neuronale Netz E trainiert.

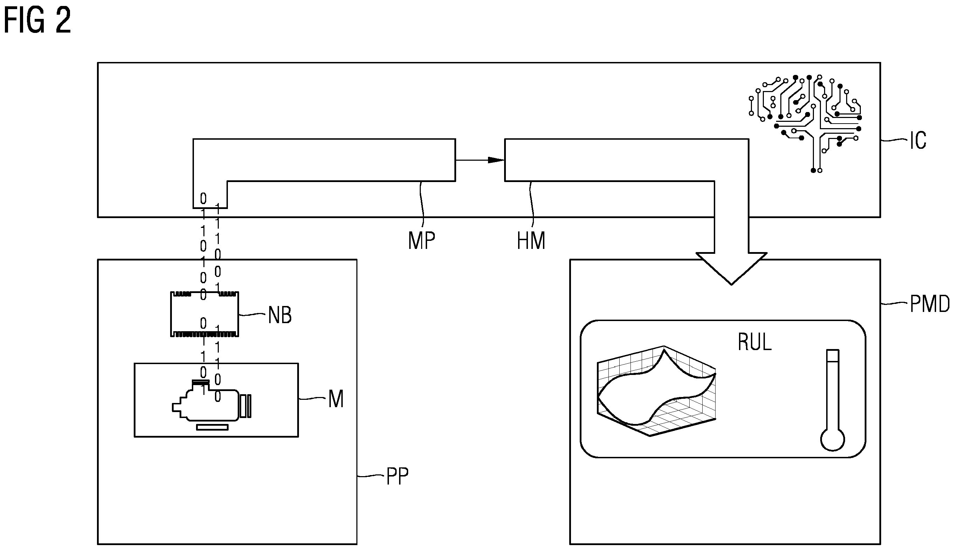

Figur 2 zeigt eine Produktionsanlage PP, in der eine Maschine M, beispielsweise ein Motor, betrieben wird. Eine Restnutzungsdauer RUL der Maschine M soll ermittelt und an einen Wartungsingenieur ausgegeben werden. Die Besonderheit ist, dass für die Maschine M kein spezifisches Simulationsmodell vorliegt, dass sie also in diesem Sinne noch unbekannt ist.

Die Maschine M ist mit Sensoren ausgerüstet. Es handelt sich hierbei um die gleiche Art von Sensoren, mit welchen das zuvor beschriebene Zustandserkennungsmodul zur Ableitung von Zustandsdaten aus den Sensordaten trainiert wurde. Geeignete Orte zur Platzierung der Sensoren, welche Sensormessungen ausreichender Güte an der Maschine M ermöglichen, werden beispielsweise durch einen Fachmann oder entsprechend einer Norm gewählt. Da die Maschine M aus der gleichen Maschinenklasse stammt, deren Maschinen für das Training des Zustandserkennungsmoduls verwendet wurde, sind Aufbau, Leistung und Maße so ähnlich, dass das Zustandserkennungsmodul die Zustandsdaten auch für die Maschine M aus den Sensordaten ableiten kann.

Das Zustandserkennungsmodul wird beispielsweise als Edge-Computing-Algorithmus implementiert, welcher in einem eingebetteten Industrie-PC NB abläuft, der die Sensordaten von der Maschine M empfängt und die Zustandsdaten an eine industrielle Cloud IC weiterleitet. Alternativ können die Sensordaten auch lediglich in dem eingebetteten Industrie-PC NB zwischengespeichert werden. In diesem Fall arbeitet das Zustandserkennungsmodul in der industriellen Cloud IC und leitet die Zustandsdaten ab, sobald die Sensordaten in der industriellen Cloud IC empfangen werden.

Die industrielle Cloud IC hält für die Maschine M ein Maschinenprofil MP bereit, welches die zuvor erläuterten Kenndaten der Maschine M sowie Informationen zum Standort der Maschine M und dem eingebetteten Industrie-PC NB enthält. Das Maschinenprofil MP dient als Instanz der Maschine M in der industriellen Cloud IC, welche ein hybrides Modell HM mit Informationen über die Maschine M versorgt. Das hybride Modell HM beinhaltet die Basissimulationen B sowie das neuronale Netz E aus Figur 1. Neben den Zustandsdaten empfängt es vom Maschinenprofil MP auch die Kenndaten der Maschine M und berechnet wie zu Figur 1 erläutert eine Restnutzungsdauer RUL der Maschine M, welche auf einem Armaturenbrett zur vorausschauenden Instandhaltung PMD an einen Wartungsingenieur ausgegeben wird. Nach Einrichtung des Maschinenprofils MP und Training des hybriden Modells HM kann dieser Prozess vollautomatisiert ablaufen.

Als eingebetteter Industrie-PC NB eignet sich beispielsweise eine SIMATIC Nanobox; alternativ kann auch ein IoT-Gateway, etwa ein SIMATIC ICT2040 verwendet werden. Als industrielle Cloud IC eignet sich beispielsweise MindSphere.

Die beschriebenen Algorithmen und Rechenschritte können beispielsweise in Recheneinheiten der Maschine, in speicherprogrammierbaren lokalen Steuerungen, auf Servern oder in einer Cloud ausgeführt werden.

Die konkrete Ausgestaltung der Algorithmen und Simulationen hängt von den Sensoren und der Technologie der Maschinen ab. Für unterschiedliche Sensortechnologien und Maschinenarten sind aus dem Stand der Technik zahlreiche Zustandserkennungs- und Simulationsalgorithmen bekannt, mit denen die einzelnen Berechnungsschritte durchgeführt werden können.

Obwohl die Erfindung durch die Ausführungsbeispiele im Detail illustriert und beschrieben wurde, ist sie nicht durch die offenbarten Beispiele eingeschränkt.

Andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können auch frei miteinander kombiniert werden.

**Patentansprüche**

1.　Verfahren zur Prognose einer Restnutzungsdauer einer Maschine, insbesondere eines Motors, wobei die Maschine einer Maschinenklasse angehört, **dadurch gekennzeichnet, dass**

- anhand von Zustandsdaten (A) der Maschine mehrere voneinander unabhängige Basissimulationen (B) rechnergestützt durchgeführt werden, welche jeweils eine Restnutzungsdauer-Prognose (P1, P2, P3) für jeweils eine Maschine der Maschinenklasse ermitteln,
- die Restnutzungsdauer-Prognosen und Kenndaten (D), welche Eigenschaften der Maschine beschreiben, einem neuronalen Netz (E) zugeführt werden, das eine Zuordnung einer beliebigen Maschine zu den Basissimulationen (B) erlernt hat,
- das neuronale Netz Gewichte (F) für die Restnutzungsdauer-Prognosen ausgibt, und
- eine finale Prognose (G) aus den Restnutzungsdauer-Prognosen rechnergestützt berechnet wird, indem die Restnutzungsdauer-Prognosen (P1, P2, P3) entsprechend der Gewichte (F) zueinander gewichtet werden.

2.　Verfahren nach Anspruch 1, bei dem

- das neuronale Netz einen Vektor linearer Gewichte ausgibt, und
- die finale Prognose berechnet wird, indem die Restnutzungsdauer-Prognosen mithilfe der Gewichte als Koeffizienten linear kombiniert werden.

3.　Verfahren nach Anspruch 1 oder 2, bei dem

- Sensoren Sensordaten eines Betriebs der Maschine erfassen, und
- aus den Sensordaten rechnergestützt die Zustandsdaten der Maschine abgeleitet werden.

4.　Verfahren nach Anspruch 3,

- bei dem die Sensordaten nach der Erfassung in eine Cloud übermittelt werden, in welcher die restlichen Verfahrensschritte durchgeführt werden, oder
- bei dem die Zustandsdaten nach deren Ableitung in eine Cloud übermittelt werden, in welcher die restlichen Verfahrensschritte durchgeführt werden.

5. Verfahren nach Anspruch 3 oder 4,

   - bei dem die Zustandsdaten der Maschine durch ein Zustandserkennungsmodul, insbesondere ein neuronales Netz, aus den Sensordaten abgeleitet werden.

6. Anordnung zur Prognose einer Restnutzungsdauer einer Maschine, insbesondere eines Motors, wobei die Maschine einer Maschinenklasse angehört, **gekennzeichnet durch** eine oder mehrere Recheneinheiten, programmiert zur

   - Durchführung mehrerer voneinander unabhängiger Basissimulationen (B), welche jeweils eine Restnutzungsdauer-Prognose (P1, P2, P3) für jeweils eine Maschine der Maschinenklasse ermitteln, anhand von Zustandsdaten (A) der Maschine,
   - Zuführung der Restnutzungsdauer-Prognosen gemeinsam mit Kenndaten (D), welche Eigenschaften der Maschine beschreiben, zu einem neuronalen Netz (E), das eine Zuordnung einer beliebigen Maschine zu den Basissimulationen (B) erlernt hat,
   - Ausgabe von Gewichten (F) für die Restnutzungsdauer-Prognosen durch das neuronale Netz, und
   - Berechnung einer finalen Prognose (G) aus den Restnutzungsdauer-Prognosen, wobei die Restnutzungsdauer-Prognosen entsprechend der Gewichte zueinander gewichtet sind.

7. Anordnung nach Anspruch 6,

   - mit Sensoren, eingerichtet zur Erfassung von Sensordaten eines Betriebs der Maschine, und
   - mit einem neuronalen Netz, welches zu einer Ableitung der Zustandsdaten der Maschine aus den Sensordaten eingerichtet ist.

8. Computerprogramm,

   - welches, wenn es in einem Prozessor abgearbeitet wird, den Prozessor dazu veranlasst, das Verfahren nach einem der Ansprüche 1 bis 2 auszuführen.

9. Computerlesbarer Datenträger,

   - auf dem das Computerprogramm nach Anspruch 8 gespeichert ist.

**Claims**

1. Method for forecasting a remaining useful life of a machine, in particular a motor, wherein the machine belongs to a machine class,
   **characterized in that**

   - state data (A) of the machine are taken as a basis for the computer-aided performance of multiple mutually independent base simulations (B) that each determine a remaining useful life forecast (P1, P2, P3) for a respective machine of the machine class,
   - the remaining useful life forecasts and characteristic data (D) that describe properties of the machine are supplied to a neural network (E) that has learned an assignment of any machine to the base simulations (B),
   - the neural network outputs weights (F) for the remaining useful life forecasts, and
   - a final forecast (G) is calculated in a computer-aided manner from the remaining useful life forecasts by weighting the remaining useful life forecasts (P1, P2, P3) with respect to one another in accordance with the weights (F).

2. Method according to Claim 1, in which

   - the neural network outputs a vector of linear weights, and
   - the final forecast is calculated by linearly combining the remaining useful life forecasts using the weights as coefficients.

3. Method according to Claim 1 or 2, in which

   - sensors capture sensor data in relation to operation of the machine, and
   - the state data of the machine are derived from the sensor data in a computer-aided manner.

4. Method according to Claim 3,

   - in which the sensor data, after they have been captured, are transmitted to a cloud in which the rest of the method steps are performed, or
   - in which the state data, after they have been derived, are transmitted to a cloud in which the rest of the method steps are performed.

5. Method according to Claim 3 or 4,

   - in which the state data of the machine are derived from the sensor data by a state recognition module, in particular a neural network.

6. Arrangement for forecasting a remaining useful life of a machine, in particular a motor, wherein the machine belongs to a machine class,
**characterized by** one or more computing units programmed to

- perform multiple mutually independent base simulations (B) that each determine a remaining useful life forecast (P1, P2, P3) for a respective machine of the machine class, on the basis of state data (A) of the machine,
- supply the remaining useful life forecasts together with characteristic data (D) that describe properties of the machine to a neural network (E) that has learned an assignment of any machine to the base simulations (B),
- output weights (F) for the remaining useful life forecasts by way of the neural network, and
- calculate a final forecast (G) from the remaining useful life forecasts, wherein the remaining useful life forecasts are weighted with respect to one another in accordance with the weights.

**7.** Arrangement according to Claim 6,

- having sensors configured to capture sensor data in relation to operation of the machine, and
- having a neural network that is configured to derive the state data of the machine from the sensor data.

**8.** Computer program,

- which, when it is run in a processor, prompts the processor to carry out the method according to either of Claims 1 and 2.

**9.** Computer-readable data carrier,

- on which the computer program according to Claim 8 is stored.

**Revendications**

**1.** Procédé pour la prévision d'une durée de vie résiduelle d'une machine, en particulier d'un moteur, dans lequel la machine appartient à une classe de machines,
**caractérisé en ce que**

- à l'aide de données d'état (A) de la machine, sont mises en oeuvre de manière assistée par ordinateur plusieurs simulations de base (B) indépendantes les unes des autres, lesquelles déterminent respectivement une prévision de durée de vie résiduelle (P1, P2, P3) pour respectivement une machine de la classe de machines,
- les prévisions de durée de vie résiduelle et des caractéristiques (D), lesquelles décrivent des propriétés de la machine, sont introduites dans un réseau neuronal (E), lequel a appris une association d'une machine quelconque aux simulations de base (B),
- le réseau neuronal émet des poids (F) pour les prévisions de durée de vie résiduelle, et
- une prévision finale (G) est calculée de manière assistée par ordinateur à partir des prévisions de durée de vie résiduelle par le fait que les prévisions de durée de vie résiduelle (P1, P2, P3) sont pondérées les unes par rapport aux autres en fonction des poids (F).

**2.** Procédé selon la revendication 1, dans lequel

- le réseau neuronal émet un vecteur de poids linéaires, et
- la prévision finale est calculée par le fait que les prévisions de durée de vie résiduelle sont combinées linéairement à l'aide des poids en tant que coefficients.

**3.** Procédé selon la revendication 1 ou la revendication 2, dans lequel

- des capteurs collectent des données de capteur d'un fonctionnement de la machine, et
- les données d'état de la machine sont déduites de manière assistée par ordinateur des données de capteur.

**4.** Procédé selon la revendication 3,

- dans lequel les données de capteur, après la collecte, sont transférées dans un cloud dans lequel les étapes de procédé restantes sont mises en oeuvre, ou
- dans lequel les données d'état, après leur déduction, sont transférées dans un cloud dans lequel les étapes de procédé restantes sont mises en oeuvre.

**5.** Procédé selon la revendication 3 ou la revendication 4,

- dans lequel les données d'état de la machine sont déduites des données de capteur par un module de reconnaissance d'état, en particulier un réseau neuronal.

**6.** Agencement pour la prévision d'une durée de vie résiduelle d'une machine, en particulier d'un moteur, dans lequel la machine appartient à une classe de machines,
**caractérisé par** une ou plusieurs unités de calcul, programmées pour

- la mise en oeuvre de plusieurs simulations de base (B) indépendantes les unes des autres, lesquelles déterminent respectivement une prévision de durée de vie résiduelle (P1, P2, P3) pour respectivement une machine de la classe de machines, à l'aide de données d'état (A) de la machine,

- l'introduction des prévisions de durée de vie résiduelle conjointement avec des caractéristiques (D), lesquelles décrivent des propriétés de la machine, dans un réseau neuronal (E), lequel a appris une association d'une machine quelconque aux simulations de base (B),

- l'émission de poids (F) pour les prévisions de durée de vie résiduelle par le réseau neuronal, et

- le calcul d'une prévision finale (G) à partir des prévisions de durée de vie résiduelle, dans lequel les prévisions de durée de vie résiduelle sont pondérées les unes par rapport aux autres en fonction des poids.

7. Agencement selon la revendication 6,

- avec des capteurs, conçus pour la collecte de données de capteur d'un fonctionnement de la machine, et

- avec un réseau neuronal, lequel est conçu pour une déduction des données d'état de la machine à partir des données de capteur.

8. Programme informatique,

- lequel, lorsqu'il est traité dans un processeur, amène le processeur à exécuter le procédé selon l'une des revendications 1 à 2.

9. Support de données lisible par ordinateur,

- sur lequel est stocké le programme informatique selon la revendication 8.

FIG 1

# FIG 2

IC

MP    HM

NB

M

PP

PMD

RUL

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017091358 A1